# EUROPÄISCHE PATENTANMELDUNG

(11) **EP 1 744 124 A1**
(43) Veröffentlichungstag der Anmeldung: **17.01.2007**
(21) Anmeldenummer: 06013784.1
(22) Anmeldetag: 04.07.2006
(51) Int. Cl.: G01C 21/36

(54) **Navigationssystem eines Kraftfahrzeuges**

(30) Priorität: 12.07.2005 DE 102005032819; 02.09.2005 DE 102005042055; 16.06.2006 DE 102006027767
(71) Anmelder: Volkswagen Aktiengesellschaft, 38436 Wolfsburg (DE)
(72) Erfinder: Fesefeldt, Martin, 30559 Hannover (DE); Bruns, Christian, 38102 Braunschweig (DE); Briel, Björn, 38442 Wolfsburg (DE); Hessing, Bernd, 31188 Holle (DE); Warda, Rüdiger, 38165 Flechtort (DE); Bäker, Wolfgang, 38162 Cremlingen (DE)

(57) **Zusammenfassung**

Ein Navigationssystem zur Zielführung eines Kraftfahrzeuges umfasst eine Verarbeitungseinrichtung, mindestens eine Anzeigevorrichtung zur Ausgabe von Fahrhinweisen auf einer Fahrtroute, die zumindest mittels Daten des Straßennetzes und der momentanen Position des Kraftfahrzeuges durch die Verarbeitungseinrichtung bestimmt worden ist, wobei die Verarbeitungseinrichtung zur Bestimmung der aktuellen Position des Kraftfahrzeuges zumindest mit einer Vorrichtung zur Positionserkennung verbunden ist, und eine Bedieneinrichtung zur Eingabe des Zielortes. Dabei weist das Navigationssystem eine elektronische Kommunikationseinrichtung auf, wobei die Kommunikation zwischen der Anzeigevorrichtung und der elektronischen Kommunikationseinrichtung drahtlos, insbesondere über Bluetooth oder WLAN, erfolgt.

## Beschreibung

Die Erfindung betrifft ein Navigationssystem für ein Kraftfahrzeug gemäß dem Oberbegriff des **Anspruchs 1.**

Die Verwendung von Navigationssysteme in Kraftfahrzeug wird immer verbreiteter und findet derzeit ihren Weg von der automobilen Oberklasse in Fahrzeuge der Mittelklasse. So ist aus der Offenlegungsschrift DE 101 41 190 A1 ein multifunktionales System für Fahrzeug-Telematikanwendungen bekannt, das eine mobile Einheit und eine im Fahrzeug angeordnete Dockingstation aufweist. Dabei verfügt die mobile Einheit über verschiedene Komponenten, insbesondere eine Navigationseinheit, und kann sowohl autonom als auch im Fahrzeug betrieben werden. Über die durch die Dockingstation hergestellte Verbindung zum Fahrzeug kann die mobile Einheit auch Fahrzeugsdaten bei der Navigation berücksichtigen. Nachteil dieses Systems ist, dass die einzelnen Bedienelemente und Bauteile durch Kabelverbindungen miteinander verbunden sind, was zu einer erheblichen Kostensteigerung führt und den Verbau in Kraftfahrzeugen erschwert.

Ferner ist aus DE 203 08 939 U1 ein Navigationssystem bekannt, das ein mobiles Steuergerät, welches aus dem Fahrzeug entfernt werden kann, und eine mit dem Fahrzeug fest verbundenen Auswerte- sowie Anzeigeeinheit aufweist. Dabei umfasst das mobile Steuergerät einen Datenspeicher, beispielsweise in Form einer Speicherkarte, welcher die zur Navigation erforderlichen Daten enthält und über eine Kabelverbindung mit der Auswerteeinheit verbunden ist. Die mobile Steuereinheit kann aus dem Fahrzeug entfernt und mit einer anderen Auswerteeinheit, beispielsweise dem heimischen PC, verbunden werden. Nachteilig ist, dass das mobile Steuergerät nicht als eigenständiges Gerät betrieben werden kann.

Der Erfindung liegt daher die Aufgabe zugrunde, ein Navigationssystem für ein Kraftfahrzeug mit einer mobilen Einheit zu schaffen, wobei die mobile Einheit sowohl als eigenständiges Gerät betrieben als auch in einfacher und kostengünstiger Weise in das Kraftfahrzeug integriert werden kann, so dass Daten der mobilen Einheit fahrzeuginternen Einrichtungen zur Verfügung gestellt werden können und umgekehrt.

Diese Aufgabe wird durch ein Navigationssystem eines Kraftfahrzeugs mit den Merkmalen des Patentanspruchs 1 gelöst. Bevorzugte Ausgestaltungen der Erfindung sind Gegenstand der Unteransprüche.

Erfindungsgemäß umfasst ein Navigationssystem eines Kraftfahrzeugs zur Zielführung desselben eine Verarbeitungseinrichtung, wobei die Verarbeitungseinrichtung zur Bestimmung der aktuellen Position des Kraftfahrzeuges zumindest mit einer Vorrichtung zur Positionserkennung verbunden ist, mindestens eine Anzeigevorrichtung zur Ausgabe von Fahrhinweisen auf einer Fahrtroute, die zumindest mittels Daten des Straßennetzes und der momentanen Position des Kraftfahrzeuges durch die Verarbeitungseinrichtung bestimmt worden ist, und eine Bedieneinrichtung zur Eingabe des Zielortes. Dabei weist das Navigationssystem eine elektronische Kommunikationseinrichtung auf und die Kommunikation zwischen der Anzeigevorrichtung und der elektronischen Kommunikationseinrichtung erfolgt drahtlos, beispielsweise über ein Bluetooth-Protokoll oder ein WLAN.

Vorzugsweise erfolgt die Kommunikation zwischen der elektronischen Kommunikationseinrichtung und zumindest einem Teil der fahrzeuginternen Einrichtungen über mindestens ein Datenbussystem, wobei insbesondere im Kraftfahrzeug ein CAN-Bus eingesetzt werden kann.

Weiter bevorzugt wird, dass die Einrichtung zur Positionserkennung eine oder mehrere fahrzeuginterne Einrichtungen sind, wobei die Einrichtung zur Positionserkennung insbesondere einen GPS-Empfänger und/oder Sensoren zur Ermittlung von Fahrzeugbewegungsdaten aufweist.

Ferner kann das Navigationssystem eine fahrzeuginterne Einrichtung zur Ausgabe von Fahrhinweisen aufweisen, wozu beispielsweise die Audioanlage des Fahrzeugs eingesetzt werden kann. Vorzugsweise wird die fahrzeuginterne Einrichtung zur Ausgabe von Fahrhinweisen durch eine Einrichtung zur akustischen Ausgabe von Fahrhinweisen gebildet.

In einer ersten bevorzugten Ausführungsform weist das Navigationssystem vorzugsweise eine mobile Systemeinrichtung bestehend aus der Verarbeitungseinrichtung und der Anzeigevorrichtung auf, wobei die Systemeinrichtung nicht fest mit dem Fahrzeug verbunden ist, sondern eine mobile Einheit darstellt, die auch unabhängig vom Fahrzeug betrieben werden kann und die mit der Kommunikationseinrichtung drahtlos kommuniziert. Dabei ist weiter bevorzugt, dass die mobile Systemeinrichtung mit einer Leseeinrichtung zum Lesen der Daten des Straßennetzes von einer Speichereinrichtung verbunden ist, d.h. die mobile Systemeinrichtung umfasst eine Lesevorrichtung für einen auswechselbaren Speicher, beispielsweise in der Form eines Kartenspeichers.

Vorzugsweise umfasst die mobile Systemeinrichtung eine Bedienvorrichtung, wobei die Bedieneinrichtung einerseits direkter Bestandteil der mobilen Systemeinrichtung oder andererseits als separates Element mit der mobilen Systemeinrichtung verbunden sein kann. Als Verbindung kann eine Kabelverbindung oder eine Funkverbindung in Betracht kommen.

In einer weiteren bevorzugten Ausführungsform ist die Bedieneinrichtung eine fahrzeuginterne Vorrichtung, wobei vorzugsweise die Bedienvorrichtung in der Lenksäule oder der Instrumententafel verbaut ist. Es ist weiter bevorzugt, dass die Bedieneinrichtung in einem Multifunktionslenkrad des Fahrzeugs angeordnet ist.

Ferner kann die Kommunikationseinrichtung zur Kommunikation mit weiteren externen Einrichtungen, insbesondere einem oder mehreren Mobiltelefonen, ausgelegt sein, wobei die Kommunikation ebenfalls über einen Funkkanal erfolgt.

Allgemein wird die Navigation zur Zielführung des Kraftfahrzeugs wie folgt durchgeführt. Die Verarbeitungseinheit bestimmt anhand der von der Kommunikationseinheit drahtlos übermittelten Daten die aktuelle geografische Position des Kraftfahrzeugs, die Fahrtrichtung und die Fahrtgeschwindigkeit. Die bestimmte Position des Kraftfahrzeugs wird mit den auf der Speichereinrichtung, beispielsweise einer SD-Card, gespeicherten Daten abgeglichen und auf der Anzeigeeinrichtung, beispielsweise einem TFT-Bildschirm, dargestellt. Die Fahrtzieleingabe erfolgt über die Bedienvorrichtung die, falls räumlich getrennt von der Navigationseinheit, vorzugsweise an der Lenkvorrichtung des Kraftfahrzeuges angebracht ist, wobei jedoch andere Anbringungsorte denkbar sind.

Die Zieleingabe kann durch die Eingabe von Stichworten und/oder durch die Auswahl des Zielortes aus einer Liste erfolgen. Vorzugsweise kann die Eingabe des Zielortes auch durch eine elektronische Visitenkarte, eine sogenannte V-Card, erfolgen, auf welcher die Zielortdaten gespeichert sind. Ferner können die über das Radio empfangenen Informationen des TMC (Traffic Message Channel) in die weitere Berechnung des Fahrweges einbezogen werden. Andere Daten zur Verkehrssituation können ebenfalls in die Berechnung einfließen.

Nach Abschluss der Eingabe des Zielortes berechnet die Verabreitungseinrichtung die Fahrtroute anhand der ihr von der Kommunikationseinrichtung, der Bedienvorrichtung und der Speichereinrichtung zur Verfügung gestellten Daten. Bei der Berechnung der Fahrtroute werden von der Verarbeitungsvorrichtung die vom Nutzer eingestellte Präferenzen wie z.B. "schnell", Fahrtroute mit geringsten Zeitaufwand, "kurz" kürzestmögliche Verbindung zum Zielort, "ohne Autobahn" oder "ohne Maut" berücksichtigt.

Nach Beendigung der Fahrtroutenberechnung beginnt die Navigationseinheit mit der Zielführung, wobei die Zielführung sowohl durch visuelle Fahrempfehlungen, vorzugsweise als bildliche Darstellung von Pfeilen auf der Anzeigevorrichtung, als auch durch akustische Fahrempfehlungen erfolgt. Beide Fahrempfehlungen erfolgen zeitsynchron und dadurch widerspruchsfrei. Dabei wird der Befehl für die Ausgabe der akustische Fahrempfehlung von der Verarbeitungsvorrichtung drahtlos an die Kommunikationseinrichtung übermittelt, welche diesen dann an das Audioausgabegerät weiterleitet.

In einer zweiten bevorzugten Ausführungsform ist die Verarbeitungseinrichtung fahrzeugfest im Fahrzeug angeordnet, d.h. die mobile Anzeige- und Bedieneinrichtung umfasst nicht die Navigationsberechnung. Vorzugsweise wird die Anzeige- und Bedieneinrichtung durch ein mobiles Endgerät, insbesondere ein PDA, Mobiltelefon oder Smartphone, gebildet. Insbesondere kann das mobile Endgerät ein mobiles nichtflüchtiges Speichermodul, beispielsweise in Form einer Speicherkarte oder eines USB-Sticks, aufweisen. Mittels des mobilen nichtflüchtigen Speichermoduls, auf dem beispielsweise regionale Daten zur Zieleingabe abgelegt sein können, ist eine einfache Aktualisierung von zur Navigation notwendigen Daten möglich. Ferner muß bei der Benutzung des Fahrzeugs in einer anderen Region lediglich das Speichermodul gewechselt werden.

Vorzugsweise umfasst die Verarbeitungseinrichtung einen weiteren, als herausnehmbares Medium ausgebildeten Speicher, wobei das Medium ebenfalls Speicherkarte ausgebildet sein kann. Hierauf können beispielsweise die Daten zur Navigation gespeichert sein, d.h. digitale Straßenkarten, die einen anderen Umfang als die Daten zur Zieleingabe aufweisen können. Durch dieses zweite auswechselbare Speichermedium kann ebenfalls eine einfache Benutzung des Fahrzeugs in einer anderen Region und ein einfaches Aktualisieren sichergestellt werden.

Die Daten für die Zieleingabe werden auf der Anzeige- und Bedieneinrichtung, d.h. dem mobilen Endgerät, eingegeben und dann an die Navigationssteuerung übermittelt. Die Kommunikation kann insbesondere im Fall eines mobilen Endgeräts über Bluetooth, WLAN oder andere nicht drahtgebundene Techniken erfolgen. Die aktuelle Position des Fahrzeugs wird auf gleichen Weg an die Anzeige- und Bedieneinheit übermittelt. Über die Anzeige- und Bedieneinheit werden zudem die Einstellungen für die Anzeigeeinheit vorgenommen.

Vorzugsweise weist das Navigationssystem eine weitere Anzeige auf, die insbesondere im Innenspiegel integriert sein kann. Andere Orte im Fahrzeug sind ebenfalls möglich. Im Innenspiegel kann diese weitere Anzeige beispielsweise durch die Anordnung eines OLED-Displays erreicht werden, die durch einen geeigneten Mikroprozessor in bekannter Weise angesteuert wird. Eine derartige weitere Anzeige im Innenspiegel kann auch bei der ersten Ausführungsform eingesetzt werden. Ferner kann ein derartiger OLED-Display auch an einem anderen Ort des Fahrzeugs eingesetzt werden, beispielsweise in der Frontscheibe.

Weiter bevorzugt weist im Fall der weiteren Anzeige im Innenspiegel dieser Bedienelemente zur Aktivierung, Deaktivierung und Stoppen der Zielführung auf.

Ferner kann auf dieser fest im Fahrzeug integrierten weiteren Anzeige neben Informationen der Navigationssteuerung auch andere Informationen anderer Anwendungen und Geräte, wie beispielsweise Freisprecheinrichtungen oder Audiosystem dargestellt werden.

Die Navigation in der zweiten Ausführungsform erfolgt im wesentlichen wie oben bereits beschrieben.

Ferner kann das Navigationssystem eine Telefoniereinheit aufweisen, wobei diese insbesondere eine Freisprecheinrichtung mit Sprachwahl beinhaltet.

Bevorzugte Ausführungsformen der Erfindung werden nachfolgend anhand der Zeichnungen näher beschrieben. In den Figuren zeigt
- Fig. 1: eine erste Ausführungsform des erfindungsgemäßen Navigationssystem in schematischer Darstellung, und
- Fig. 2: eine zweite Ausführungsform des erfindungsgemäßen Navigationssystem in schematischer Darstellung

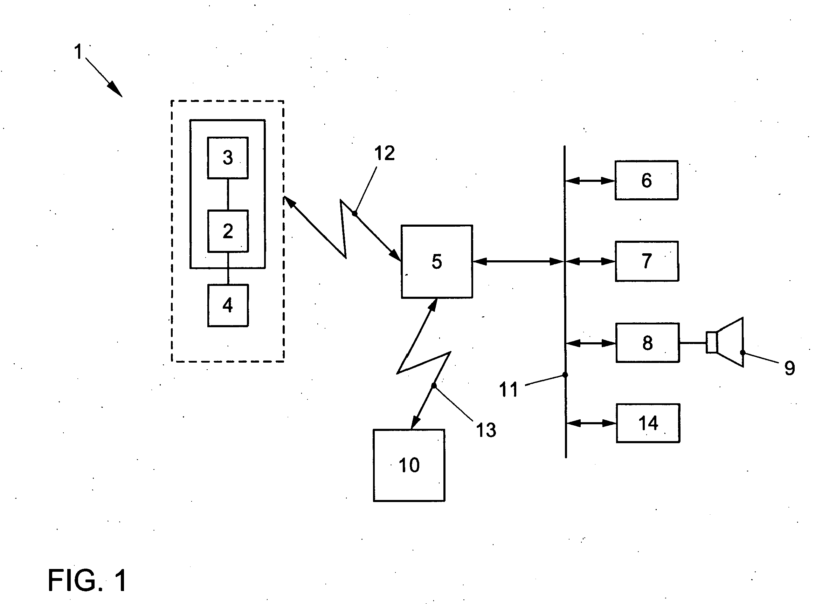

Figur 1 zeigt eine schematische Darstellung der ersten Ausführungsform des erfindungsgemäßen Navigationssystems, welches eine Verarbeitungseinrichtung 2, mindestens eine Anzeigeeinrichtung 3 und eine Bedien- bzw. Eingabeeinrichtung 4 sowie eine Kommunikationseinrichtung 5 aufweist. Dabei bilden die Verarbeitungseinrichtung 2 und die Anzeigeeinrichtung 3 eine mobile Systemeinheit 1, die ferner eine nicht dargestellte mobile nichtflüchtige Speichereinheit, beispielsweise eine Kartenleseeinheit wie eine SD- oder CF-Kartenleseeinheit aufweist. Auf der Speicherkarte bzw. auf einem anderen mobilen nichtflüchtigen Speicher befinden sich die zur Navigation notwendigen Informationen über das Straßennetz sowie sonstige nützliche Hinweise, beispielsweise Sehenswürdigkeiten, Hotels, Restaurants, etc., entlang der jeweiligen Fahrtroute.

Die Berechnungen zur Navigation und zur Zielführung des Fahrzeugs werden mittels der Verarbeitungseinrichtung 2 der mobilen Systemeinheit 1 durchgeführt, wobei die mobile Systemeinheit mittels eines Funkkanals, beispielsweise nach dem Bluetooth-Protokoll oder nach dem WLAN-Protokoll, mit der fahrzeugfesten Kommunikationseinrichtung 5 kommuniziert.

Die Kommunikationseinrichtung 5 nimmt dabei Schnittstellenaufgaben war und wird auch als Car Interface Box, kurz CIB, bezeichnet. Sie ist an einen CAN-Bus 11 angeschlossen, an dem weitere fahrzeuginterne Einrichtungen, wie GPS-Empfänger 6, Fahrzeugsensoren 7 zur Bestimmung von Fahrzeugbewegungsdaten und eine Fahrzeugaudioeinheit 8 mit TMC-Funktion und Fahrzeuglautsprechern 9 angeschlossen ist.

Die Eingabe- oder Bedieneinrichtung 4 kann dabei integraler Bestandteil der mobilen Systemeinheit 1 sein. Es ist auch möglich, die Bedieneinheit 4 separat von der mobilen Systemeinheit 1 im Fahrzeug anzuordnen. Die Verbindung mit der mobilen Systemeinheit kann dabei mittels eines geeigneten Kabels oder drahtlos, d.h. per Funk, erfolgen. Ferner kann die Bedieneinheit 4 auch Bestandteil eines optionalen Multifunktionslenkrads 14 sein, was ebenfalls an den CAN-Bus 11 angeschlossen ist.

Des weiteren weist die erfindungsgemäße Vorrichtung eine Einrichtung zur Bestimmung der momentanen. Fahrzeugposition auf, wobei diese aus einem im Kraftfahrzeug angeordneten GPS-Empfänger 6 sowie fahrzeugeigenen Sensoren 7 zur Ermittlung von Fahrzeugbewegungsdaten, wie Fahrtrichtung und Fahrgeschwindigkeit besteht. Die Verarbeitungseinrichtung 2 bestimmt zumindest anhand der Daten der momentanen Position des Kraftfahrzeuges, die von den Einrichtungen zur Positionserkennung 6, 7 ermittelt worden sind, den von der Speichereinrichtung ausgelesenen Daten des Straßennetzes und dem über die Bedieneinrichtung 4 eingegebenen Zielort die Fahrtroute zum Zielort und steuert die Anzeigeeinrichtung 3 zur Ausgabe von Fahrhinweisen an. Zur Ermittlung der Fahrtroute können von der Verarbeitungseinrichtung 2 weitere Daten, die sie von fahrzeuginternen Einrichtungen erhält, hinzugezogen werden. Dies sind beispielsweise Verkehrsinformationsdaten vom TMC-Empfänger 8. Andere Daten, insbesondere Verkehrsinformationsdaten anderer Quellen, sind denkbar.

Der GPS-Empfänger 6 kann als GPS-Maus mit gegebenenfalls integrierter TMC-Funktionalität realisiert sein. Die GPS-Daten werden der mobilen Systemeinheit mittels beispielsweise Bluetooth drahtlos von der Kommunikationseinrichtung 5 zugeführt. Daher ist es auch möglich die mobile Systemeinheit mittels einer GPS-Maus, die Daten mittels Bluetooth überträgt, als Stand-alone-Gerät zu betreiben.

Nach der Errechnung der Fahrroute wird der Fahrer durch Ausgabe von visuelle Fahrhinweisen über die Anzeigeeinrichtung 3 zum Fahrtziel gelotst. Zusätzlich kann die Zielführung des Fahrers über eine akustische Ausgabe von Fahrhinweisen, beispielsweise über das Lautsprechersystem 9 des Autoradios 8, erfolgen. Weiterer Anzeigen; hier nicht dargestellt, sind möglich, beispielsweise als OLED-Anzeige im Innenspiegel oder an einem anderen Ort im Fahrzeug. Ferner kann die Nutzung von bereits vorhandenen Anzeige- und/oder Bedieneinrichtungen ebenfalls vorgesehen sein.

Die Verarbeitungseinheit, d.h. die mobile Systemeinheit, kommuniziert mit der Bedienvorrichtung und der Kommunikationseinrichtung drahtlos vorzugsweise über ein Bluetooth-Protokoll, wobei der Kommunikationseinrichtung dabei Daten von der Messeinrichtung, insbesondere Geschwindigkeit und Fahrtrichtung des Kraftfahrzeuges, sowie vom GPS-Empfänger die aktuelle Position des Fahrzeuges und vom TCM (Traffic Message Channel)-Empfänger die aktuellen Verkehrsdaten mittels eines CAN-Bus zur Verfügung gestellt werden. Über den Bus können auch weitere im Fahrzeug vorliegende Daten an das Navigationssystem übermittelt werden, die dessen Leistungsfähigkeit verbessern.

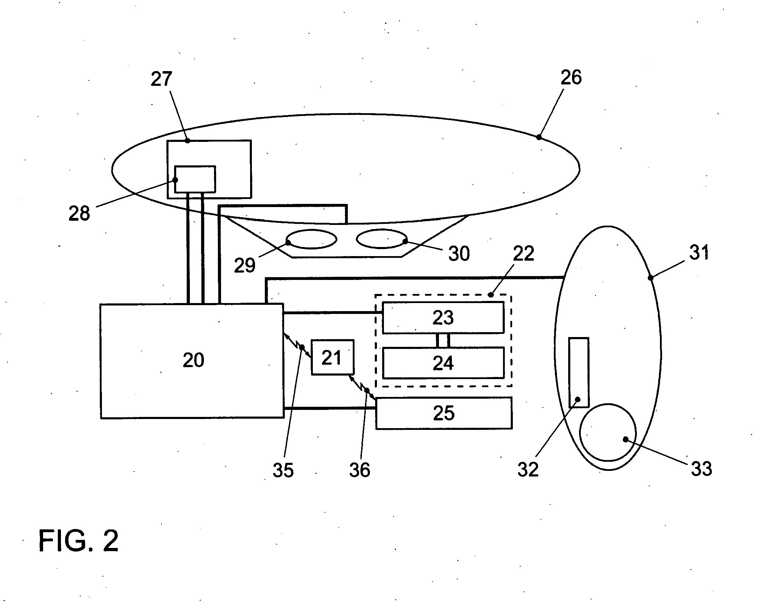

Fig. 2 zeigt eine zweite Ausführungsform eines Navigationssystems gemäß der Erfindung. Diese Ausführungsform umfasst eine fahrzeugfeste Verarbeitungseinheit 20, welche die Zielführung des Fahrzeugs, d.h. die Navigation, berechnet. Ferner weist das Navigationssystem nach Figur 2 eine Anzeige- und Bedieneinrichtung 21, d.h. beispielsweise ein mobiles Endgerät auf, die drahtlos, vorzugsweise über Bluetooth oder ein anderes geeignetes Protokoll zur drahtlosen Datenübertragung mit der Verarbeitungseinrichtung 20 verbunden ist, was durch das Bezugszeichen 35 dargestellt ist. Mittels der Anzeige- und Bedieneinrichtung 21 wird die Einstellung der Routenberechnung, die Zieleingabe (Land, Stadt, Strasse), die Übertragung der Zieldaten an die Verarbeitungseinrichtung 20, die Optimierung der Zieleingabe, die Anzeige der GPS-Daten, die Eingabe der Hausnummer, die Eingabe von Sonderzielen, die Einstellungen bezüglich Audio und Sprache, sowie Service-Modus, Zugriff und Änderungen des Adressbuchs, Definition von Etappenzielen, letzte Ziele und Einstellung des internen und gegebenenfalls eines weiteren Displays vorgenommen. Ferner hat die Anzeige- und Bedieneinrichtung eine graphische Benutzerschnittstelle. Wie bereits erwähnt, kommen als Anzeige- und Bedieneinrichtung mobile Endgeräte wie PDAs oder ähnliche Geräte zum Einsatz.

Die Verarbeitungseinrichtung 20, die für die Navigationsfunktion zuständig ist, weist in dieser Ausführungsform auch die Telefonfunktion des Fahrzeugs auf. Ferner ist die Verarbeitungseinrichtung 20 mit der Freisprecheinrichtung 25 mit VoiceDial, d.h. Spracheingabe bzw. Sprachwahl, verbunden. Die Freisprecheinrichtung ist über einen drahtlosen Kanal, vorzugsweise Bluetooth, ebenfalls mit dem mobilen Endgerät 21 verbunden und tauscht mit diesem entsprechende Daten aus. Dabei wird in der bevorzugten Ausführungsform ein rSAP-Protokoll verwendet. Die Freisprecheinrichtung 25 ist daher für die folgenden Funktionen zuständig: PIN-Eingabe, Namen wählen, Namen speichern, Nehmen löschen, Update über CF-Karte oder dergleichen, Darstellung der Rufnummer auf dem Display, Nummer wählen, Telefonieren im Freisprechmodus, Telefon mit Klemme 15 schalten, VD-Spracherkenner und Ausgabe in Deutsch oder Englisch, Telefon ausschalten, automatische Anpassung der Sprache an Navigationssprache und Anbindung des nicht dargestellten Handys über beispielsweise rSAP-Protokoll oder dergleichen.

An die Verarbeitungseinrichtung 20 ist eine weitere Anzeige 27 angeschlossen, die vorzugsweise als OLED-Display ausgelegt ist und mit dem notwendigen µ-Prozessor 28 im Innenspiegel 26 angeordnet ist. Die weitere Anzeige 27 dient ebenso zur Anzeige von Navigationshinweisen wie die Anzeige des mobilen Endgeräts 21. Ferner sind am Innenspiegel 26 noch zwei Bedienelemente angeordnet, nämlich einen Ein-/Ausschalter 29 zum Ein- bzw. Ausschalten des weiteren Displays 27 und gegebenenfalls zum Stoppen der Zielführung und einen Bedienschalter 30 bezüglich der Abblendfunktion des Innenspiegels.

Schließlich ist die Verarbeitungseinrichtung 20 noch mit einem Dachmodul 31 verbunden, das ein Mikrophon 32 und eine Telefonsteuerung 33 aufweist.

Die Verbindung der Verarbeitungseinheit 20 mit den fahrzeugfesten Komponenten kann auch in bekannter Weise über ein Bussystem, beispielsweise einen CAN-Bus erfolgen. Nicht dargestellt in Figur 2 sind Komponenten wie eine GPS-Einrichtung bzw. Messeinrichtungen mit Sensoren zur Bestimmung fahrzeugspezifischer Daten für die Navigation.

Die Navigations-Steuerung in der Verarbeitungseinrichtung 21 steuert folgende Funktionen: drahtlose Kommunikation (Bluetooth), automatisches Update der Navigation, Aufnahme der Zieldaten, graphische Benutzerschnittstelle auf dem Display, Übertragung der Daten auf den PDA, Service-Modus, Unterbrechung der Routenführung, Routenberechnung (mit Progressbalken), Routenführung mit Sprachausgabe und Graphik auf dem OLED-Display, Navigationsmeldungen in verschiedenen Sprachen, Fahrzeug-Interface, Power-Management, Nachlaufzeit S-Kontakt 1 Minute, Zündung 10 Minuten, Externe Sensoren, Diagnose, Einstellung der Nachlaufzeiten, Steuerung des Displays bezüglich Helligkeit, Kontrast und Farbe.

Das Navigationssystem sieht zwei Kartenleseeinheiten bzw. mobile nichtflüchtige Speichereinheiten vor (nicht dargestellt). Eine Speichereinheit ist im PDA 21 angeordnet, während die zweite sich in der Verarbeitungseinrichtung 20 befindet. Es ist auch möglich, dass die Verarbeitungseinrichtung 20 eine fest integrierte Speichereinrichtung aufweist.

### Bezugszeichenliste

- 1: Systemeinrichtung
- 2: Verarbeitungseinrichtung
- 3: Anzeigeeinrichtung
- 4: Bedieneinrichtung
- 5: Kommunikationseinrichtung
- 6: GPS-Empfänger
- 7: Messeinrichtung mit Sensoren
- 8: TMC
- 9: Lautsprecher
- 10: externe Einrichtung (z.B. Mobiltelefon)
- 11: CAN-Bus
- 12: drahtlose Kommunikation
- 13: drahtlose Kommunikation

- 20: Verarbeitungseinrichtung
- 21: Bedien- und Anzeigeeinrichtung (mobiles Endgerät)
- 22: Audioeinrichtung
- 23: Audiomodul
- 24: Bedieneinheit
- 25: Freisprecheinrichtung
- 26: Innenspiegel
- 27: OLED-Anzeige
- 28: µ-Prozessor
- 29: Ein-/Ausschalter
- 30: Abblendfunktion
- 31: Dachmodul
- 32: Mikrophon
- 33: Telefonsteuerung
- 34: drahtlose Verbindung
- 35: drahtlose Verbindung

## Patentansprüche

1. Navigationssystem zur Zielführung eines Kraftfahrzeuges mit einer Verarbeitungseinrichtung, mindestens einer Anzeigevorrichtung zur Ausgabe von Fahrhinweisen auf einer Fahrtroute, die zumindest mittels Daten des Straßennetzes und der momentanen Position des Kraftfahrzeuges durch die Verarbeitungseinrichtung bestimmt worden ist, wobei die Verarbeitungseinrichtung zur Bestimmung der aktuellen Position des Kraftfahrzeuges zumindest mit einer Vorrichtung zur Positionserkennung verbunden ist, und einer Bedieneinrichtung zur Eingabe des Zielortes, **dadurch gekennzeichnet,**
**dass** das Navigationssystem eine elektronische Kommunikationseinrichtung aufweist, wobei die Kommunikation zwischen der Anzeigevorrichtung und der elektronischen Kommunikationseinrichtung drahtlos, insbesondere über Bluetooth oder WLAN, erfolgt.

2. Navigationssystem nach Anspruch 1, **dadurch gekennzeichnet, dass** die Kommunikation zwischen der elektronischen Kommunikationseinrichtung und zumindest einem Teil der fahrzeuginternen Einrichtungen über mindestens ein Datenbussystem erfolgt

3. Navigationssystem nach Anspruch 1 oder 2, **dadurch gekennzeichnet, dass** die Einrichtung zur Positionserkennung eine oder mehrere fahrzeuginterne Einrichtungen sind.

4. Navigationssystem nach einem der Anspruche 1 bis 3, **dadurch gekennzeichnet, dass** die Einrichtung zur Positionserkennung einen GPS-Empfänger und Sensoren zur Ermittlung von Fahrzeugbewegungsdaten aufweist.

5. Navigationssystem nach einem der vorangegangenen Ansprüche, **dadurch gekennzeichnet, dass** das Navigationssystem eine fahrzeuginterne Einrichtung zur Ausgabe von Fahrhinweisen aufweist.

6. Navigationssystem nach Anspruch 5, **dadurch gekennzeichnet, dass** die fahrzeuginterne Einrichtung zur Ausgabe von Fahrhinweisen eine Einrichtung zur akustischen Ausgabe von Fahrhinweisen ist.

7. Navigationssystem nach einem der vorangegangenen Ansprüche, **dadurch gekennzeichnet, dass** das System eine mobile Systemeinrichtung bestehend aus der Verarbeitungseinrichtung und der Anzeigevorrichtung aufweist.

8. Navigationssystem nach Anspruch 7, **dadurch gekennzeichnet, dass** die mobile Systemeinrichtung mit einer Leseeinrichtung zum Lesen der Daten des Straßennetzes von einer Speichereinrichtung verbunden ist.

9. Navigationssystem nach Anspruch 7 oder 8, **dadurch gekennzeichnet, dass** die Systemeinrichtung die Bedienvorrichtung umfasst.

10. Navigationssystem nach Anspruch 7 oder 8, **dadurch gekennzeichnet, dass** die Bedieneinrichtung eine fahrzeuginterne Vorrichtung ist.

11. Navigationssystem nach Anspruch 10, **dadurch gekennzeichnet, dass** die Bedienvorrichtung in einem Multifunktionslenkrad angeordnet ist.

12. Navigationssystem nach einem der Anspruche 1 bis 10, **dadurch gekennzeichnet, dass** die Kommunikationseinrichtung zur Kommunikation mit weiteren externen Einrichtungen, insbesondere einem oder mehreren Mobiltelefonen, ausgebildet ist.

13. Navigationssystem nach einem der Ansprüche 1 bis 6, **dadurch gekennzeichnet, dass** die Verarbeitungseinrichtung fahrzeugfest angeordnet ist.

14. Navigationssystem nach Anspruch 13, **dadurch gekennzeichnet, dass** die Anzeige- und Bedieneinrichtung durch ein mobiles Endgerät, insbesondere ein PDA, Mobiltelefon oder Smartphone gebildet wird.

15. Navigationseinrichtung nach Anspruch 14, **dadurch gekennzeichnet, dass** das mobile Endgerät einen herausnehmbaren Speicher, insbesondere in Form einer Speicherkarte, aufweist.

16. Navigationsgerät nach einem der Ansprüche 13 bis 15, **dadurch gekennzeichnet, dass** die Verarbeitungseinrichtung einen weiteren, als herausnehmbares Medium ausgebildeten Speicher aufweist.

17. Navigationsgerät nach einem der Ansprüche 13 bis 16, **dadurch gekennzeichnet, dass** das Navigationssystem eine weitere Anzeige aufweist, die im Innenspiegel integriert ist.

18. Navigationssystem nach Anspruch 17, **dadurch gekennzeichnet, dass** der Innenspiegel Bedienelemente zur Aktivierung, Deaktivierung und Stoppen der Zielführung aufweist.

19. Navigationssystem nach einem der vorangegangenen Ansprüche, **dadurch gekennzeichnet, dass** das System eine Telefoniereinheit aufweist.

20. Navigationssystem nach Anspruch 19, **dadurch gekennzeichnet, dass** die Telefoniereinheit eine Freisprecheinrichtung mit Sprachwahl aufweist.
